# EUROPEAN PATENT SPECIFICATION

(11) **EP 0 305 193 B1**
(45) Date of publication and mention of the grant of the patent: **03.02.1993**
(21) Application number: 88307916.2
(22) Date of filing: 26.08.1988
(51) Int. Cl.: C03C 11/00, C03B 19/08

(54) **Skin-surfaced foam glass tile and method for production thereof**
Schaumglasplatte mit dichter Oberfläche und Verfahren zu ihrer Herstellung
Carreau de verre cellulaire à surface étanche et méthode pour le produire

(30) Priority: 26.08.1987 JP 212457/87; 27.08.1987 JP 213673/87
(43) Date of publication of application: 01.03.1989
(73) Proprietor: INAX CORPORATION, Tokoname-Shi Aichi (JP)
(72) Inventor: Fukumoto, Katsuhisa, Tokoname-shi Aichi (JP); Nakada, Ryo, Tokoname-shi Aichi (JP); Kawanishi, Kiyotaka, Tokoname-shi Aichi (JP); Yamano, Junpei, Tokoname-shi Aichi (JP)
(74) Representative: Moir, Michael Christopher

(56) References cited:
- DE-A- 913 579
- US-A- 2 202 714
- US-A- 2 310 432
- US-A- 3 330 627
- US-A- 3 468 989
- PATENT ABSTRACTS OF JAPAN, vol. 10, no. 23 (C-325)[2080], 29th January 1986; & JP-A-60 176 932 (INA SEITOU K.K.) 11-09-1985
- PATENT ABSTRACTS OF JAPAN, vol. 9, no. 153 (C-288)[1876], 27th June 1985; & JP-A-60 33 219 (TOYODA CHUO KENKYUSHO K.K.) 20-02-1985

## Description

### BACKGROUND OF THE INVENTION

### Field of the Invention:

This invention relates to a method for producing heat-insulating foam glass tile having a beautiful strong skin layer at least on the top surface thereof and the resulting heat-insulating skin-surfaced foam glass tile.

### Prior Art:

Heat-insulating materials such as foamed plastics, glass wool or rock wool have been applied onto the outside or inside of buildings, and then such insulating materials thus applied have been covered with surface materials. Because such insulating materials are of weak strength, heavy decorative sheets such as tile can not be used to cover the insulating materials and light-weight surface materials of less decorative property are used.

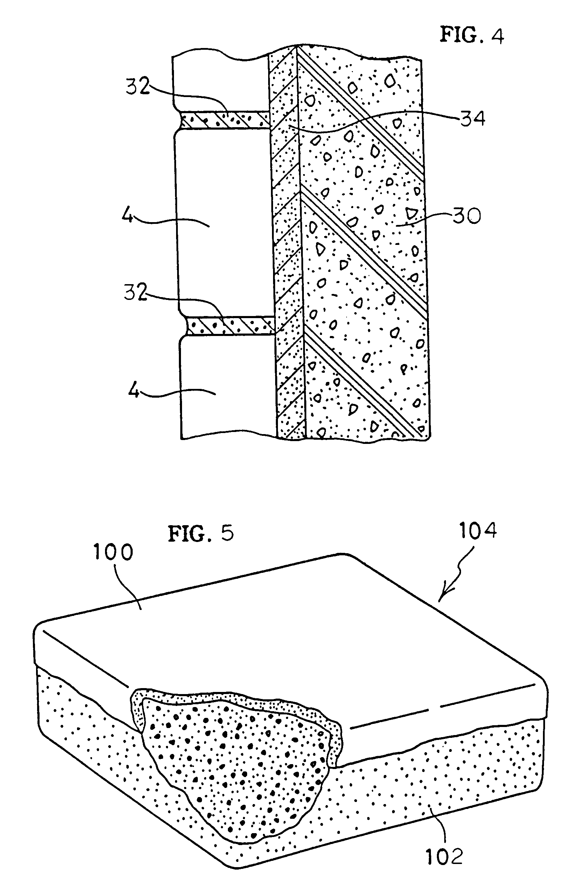

It has been tried to use heat-insulating foam glass tile pieces as the outside covering materials of buildings, which have decorative insulating properties. Such conventional foam glass pieces are weak in strength such as surface strength and are not practicable. Such weak strength may be increased by applying a strong glaze layer 100 on such a foam glass body 102 as shown in FIG.5.

Such glazed foam glass pieces 104, however, have serious defects as summarized below.
(1) The glazed layer needs to be thick to prevent it from cracks, pinholes and unevenness, because the glaze is elongated in all directions when the foam glass body is expanded in the course of production.
(2) The step of coating such thick glaze layers are troublesome and complicated in operations. When powder glaze materials are used instead of wet glaze materials, thick glaze coating is carried out more easily, but has defects in that the apparatus is complicated, the glazed layer is apt to peel off and it is difficult to apply the glaze onto complicated surfaces.
(3) The thick glaze layer causes deformation such a warps of foam glass pieces and decrease in strength of the glazed layer due to stress, because the glaze layer 100 is apt to shrink and the foam glass body 104 expands in the course of production.
(4) The thick glaze layer causes the foam glaze piece to decrease the heat-insulating property and increase the weight, because the glaze layer has good thermal conductivity and is comparatively heavy.
(5) Foam glass piece having a thick glaze layer is very weak in thermal shocks due to sudden change in temperature, because the glaze layer and foam glass body are largely different in heat capacity and thermal conductivity.
(6) It is difficult to apply a thick glaze layer onto a foam glass body having complicated surface structures.

A glazed foam glass piece as mentioned above is shown in JP-A-60 176 932, wherein a molded body composed of volcanic glass mineral and foaming agent powder is coated with a glaze slurry of volcanic glass mineral and then fired at a foaming gas-generation temperature. A similar glass-coated cellular glass product is shown in US-A-2 202 714, wherein a cellular glass plate is coated with crushed glass and then as necessary with crushed coloured glass and flux (eg. lead borate), and then fired to a crushed glass-fusing temperature.

### SUMMARY OF THE INVENTION

The main object of the present invention is to provide a method for producing heat-insulating skin-surfaced foam glass tile and the resulting skin-surfaced foam glass tile, wherein the above-mentioned problems have been eliminated.

Other objects and features of the present invention will become apparent in the following descriptions and drawings.

According to the present invention, there is provided a method for producing a heat-insulating skin-surfaced foam glass tile from vitrifiable mineral particles; which comprises:
molding a material consisting essentially of a vitrifiable mineral and an effective amount of a foaming agent into a tile-like block,
coating at least the top surface of the block at about 3mg to 50mg per square centimetre on a dry basis with a thin layer which includes a vitrifying agent for the mineral material of the block,
heating the coated block to a temperature of fusing the coated layer to permeate substantially all of the molten vitrifying agent into the coated surface of the block, to produce a softened layer comprising a mixture of the vitrifying agent and the vitrifiable mineral,
further heating the coated block to a higher temperature sufficient to soften the vitrifiable mineral and decompose the foaming agent, and
standing the foamed tile-like block to cool;
whereby a rigid reinforcing skin layer consisting essentially of a vitrified mixture of the vitrifiable mineral and the permeated vitrifying agent is formed and integrally melt-bonded to the coated surface of the resulting foam glass tile.

In the above-described method, the molded tile-like block can have at least a top thin layer consisting essentially of a vitrifiable mineral and a less amount of a foaming agent. The thin layer containing a less amount of the foaming agent is applied, for example by spraying, onto at least the top surface and as necessary the surfaces of the molded tile-like block where the thin layer comprising the vitrifying agent is to be coated. In other words, the tile-like block coated with a vitrifying agent layer is prepared by molding a material consisting essentially of a vitrifying mineral and an effective amount of a foaming agent into a tile-like block; applying a layer consisting essentially of a vitrifying mineral containing a foaming agent in an amount (eg. about 5 to 60% by weight) less than the quantity of the effective amount, onto at least the top surface of the molded block; and coating thereon a vitrifying agent layer.

Thus, there is obtained, according to another aspect of the invention a skin-surfaced foam glass tile composed of a vitrified mineral and having heat-insulating properties, strength, closed cell structure and decorative tile design, which comprises a foam glass tile body and a rigid reinforcing skin layer consisting essentially of a vitrified mixture of a vitrifiable mineral and a vitrifying agent permeated into the mineral, said skin layer being integrally melt-bonded onto at least the top surface of the foam glass tile body, and containing about 3mg to 50mg per square centimetre of the vitrifying agent.

The invention further provides a plurality of tiles as set forth above, or manufactured by a method as set forth above, being affixed to a substrate to form a heat-insulating layer thereon, the joints between the tiles being filled with a heat-insulating joint paste containing cellular aggregate.

It is generally desired that the skin layer has a thermal expansion coefficient similar to and preferably substantially the same as that of the foam glass body or the intermediate layer.

### BRIEF DESCRIPTION OF THE DRAWINGS

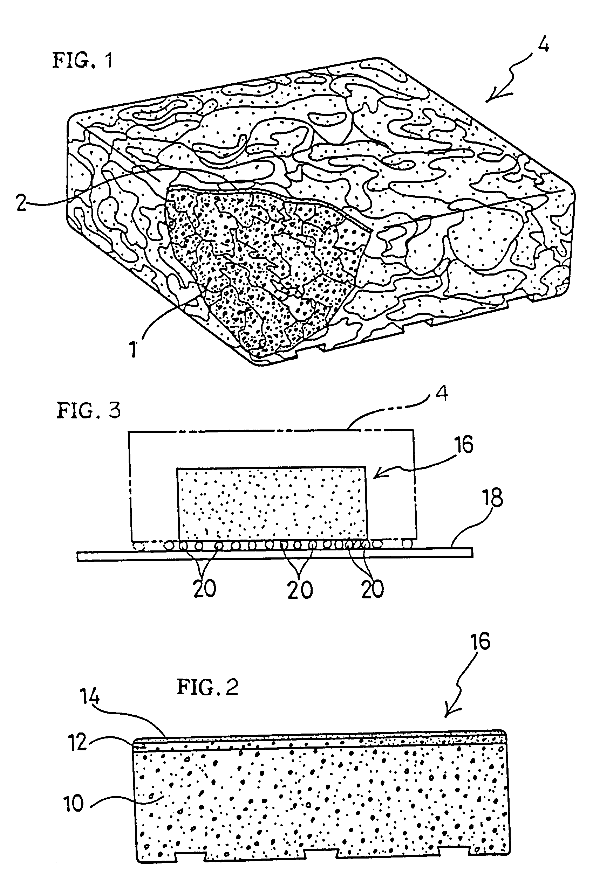

FIG.1 is a perspective view of a partly brocken skin-surfaced foam glass tile 4 according to the present invention. FIG.2 is a cross-sectional view of a skin-surfaced foam glass tile 16 having a thin intermediate rigid layer 12 between the skin layer 14 and foam glass body 10, according to an embodiment of the present invention. FIG.3 is a schematic side view showing the use of refractory granules as runner granules 20 between a tile-like block 16 and a firing stand 18 in a firing step according to the present invention. FIG.4 is a cross-sectional view showing installation of the present foam glass tiles 4 on a wall 30 with a heat-insulating joint paste 32 between the foam glass tiles 4. FIG.5 is a perspective view of a partly brocken conventional foam glass block 104 having a comparative thick glaze layer 100 thereon.

### PREFERRED EMBODIMENTS OF THE INVENTION

### (1) Vitrifiable Mineral Particles

The vitrifiable mineral particle for producing the foam glass tile are powder or fine granules of natural minerals which are softened at a firing temperature of about 700 to 1300°C or more. Such vitrifiable minerals include, for example, liparite (e.g. kokaseki in Japanese), rhyolite, pearlite, obsidian, volcanic ash, and other vitrifiable igneous rocks. These minerals are generally pulverized into powder of mean particle size of less than 1 mm and preferably 0.5 mm or less, and typically less than about 0.2 mm.

### (2) Vitrifying Agent for the Mineral Particles

The vitrifying agents are those which preferably have a melting temperature lower than the softening or melting temperature of the vitrifiable mineral particles and have the properties of readily fusing the vitrifiable mineral. When the vitrifying agent is coated on a tile-like block comprising the vitrifiable mineral particles and heated to a fusing temperature of the vitrifying agent, the molten vitrifying agent permeates into the coated surface of the block and lowers the softening temperature of the resulting mixture layer comprising the permeated vitrifying agent and vitrifiable mineral by about 100°C or more and preferably about 150∼300°C in comparison with that of the vitrifiable mineral.

Thus, a rigid reinforcing skin-surfaced layer composed of the vitrified mixture of the vitrifiable mineral and vitrifying agent is formed on the coated surface of the resulting foam glass tile body, when the coated tile-like block is heated to a higher temperature.

The vitrifying agents include, for example, inorganic powder compounds of an alkali metal (e.g. sodium, potassium, lithium); inorganic powder compounds of an alkaline earth metal (e.g. calcium, magnesium); inorganic glass powder containing an alkali metal, alkaline-earth metal, or boron component; inorganic water glass containing an alkali metal component; and mixtures thereof. Incidentally, the vitrifying agents generally have a softening or melting temperature of about 300°C to about 1000°C or more.

The vitrifying agents are used alone or as a mixture of the agent (about 10% by solid weight or more) with a vitrifiable mineral (about 90% by weight or less) preferably of the type used in the tile-like block or the intermediate layer on the block.

The vitrifying agent is generally applied in the form of an aqueous suspension, for example by spraying, onto the top surface and as necessary the side surface of the molded tile-like block or the intermediate layer-coated tile-like block. The quantity to be applied is in the range of generally about 3∼50 mg in dry basis (about 5∼75 mg in wet basis) and normally about 6∼25 mg in dry basis (about 10∼40 mg in wet basis) per square centimeter of the coating surface of the molded tile-like block before firing. Incidentally, the vitrifying agent should be clearly distinguished from conventional glazing agent, because the glazing agent is applied in a quantity of 60∼120 mg in dry basis and 100∼200 mg in wet basis per square cm of the glazing surface of such molded blocks and the resulting glaze layer often create cracks and pinholes due to the foaming expansion of the molded block, and other defects as described in the paragraph of Prior Art above.

### (3) Foaming Agent

The foaming agent is generally an inorganic compound which is decomposed to generate a foaming gas at a softening temperature of the vitrifiable mineral particles, and is used in a quantity of generally about 0.02∼2 % and normally about 0.1∼1 % by weight of the vitrifiable mineral, herein being referred to as an effective amount. Such foaming agents include, for example, silicon carbide, silicon nitride, carbon, gypsum, inorganic carbonates, and mixtures thereof. ln the present invention, silicon carbide or a mixture thereof is normally preferred from the viewpoint of formation of closed cells, melt viscosity thereof, etc.

### (4) Molded Tile-like Block

A mixture of the vitrifiable mineral particles and the effective amount of the foaming agent is molded into a tile-like blocks by means of compression, wet extrusion, or other methods such as cast molding. The mixed materials generally contain a pigment for coloring the resulting foam glass tile.

In a preferred embodiment, densified particles having mean sizes of about 0.05∼0.5 mm of the mixed materials are effectively used to obtain more uniformly expanded foam glass tile having dimensional stability. Such densified particles having good flowability and uniform packing property can be produced by mixing the above-mentioned materials in the presence of water or an aqueous binder solution, compressing the mixed materials into lumps, and then pulverizing the lumps into powder.

### (5) Intermediate Layer coated on the Molded Block

In a preferred embodiment, at least the surface of the above-described molded tile-like block is coated with a thin layer consisting essentially of a vitrifiable mineral and a less amount of a foaming agent, the types of these materials being normally the same as those used in the block. The thin layer is applied onto the top surface and as necessary a side surface of the molded block, for example by spraying or curtain-coating an aqueous mixture of the materials. Alternatively, powder materials can be compression-molded. The mixed materials generally contain a pigment for coloring the resulting foam glass tile. ln this case, the molded block is not always needed to contain a pigment. The thickness of the coated thin layer is generally about 3 mm or less to produce a reinforcing rigid intermediate layer of about 3 mm or less after firing expansion. Incidentally, the amount of the foaming agent to be used is generally about 3∼70 % and normally about 5∼60 % by weight of the quantity to be used in the molded tile-like block. The intermediate layer serves to prevent formation of pinholes on the vitrified skin layer and also to reinforce the foam glass tile.

### (6) Firing Step of Coated Tile-like Blocks

The molded tile-like block coated with a thin layer comprising the vitrifying agent is gradually heated to a temperature of softening the vitrifiable mineral and decomposing the foaming agent, normally by means of a tunnel kiln, a roller hearth kiln, or other transportation-type kilns. The firing temperature depends on the types of the vitrifiable minerals and foaming agents, and is normally lower than about 1300°C. For example, the firing can be carried out for about 24 hours and at the maximum temperature of 1180°C for 1 hour in the case of tunnel kiln; and for about 3∼8 hours depending on the thickness of the resulting foam glass tile in the case of roller hearth kiln. By passing the coated block through such kilns, the coated block is readily heated to a temperature of fusing the vitrifying agent, and then to a temperature of softening the vitrifiable mineral and decomposing the foaming agent.

As illustrated in FIG.3, when the molded tile-like block 16 is placed on a stand 18 and fired in a kiln, refractory inorganic granules 20 having a diameter size of about 0.5∼5 mm(e.g. a mean size of about 1.5 mm) are preferably used between the molded block 16 and the firing stand 18. In the kiln, the molded block is smoothly foam-expanded to about 2-fold surface areas in all directions with less friction by the action of the runner or slide granules 20. Thus, uniformly expanded dimension-stable foam glass tile 4 is readily obtained without the use of a covering mold.

### (7) Skin-surfaced Foam Glass Tile

The present skin-surfaced foam glass tile produced according to the present method is characterized by a thin rigid skin layer consisting essentially of a vitrified mixture of a vitrifiable mineral and a vitrifying agent and being melt-bonded integrally onto at least a top surface of a foam glass tile body. The thickness of the skin layer composed of the vitrified mixture is generally about 0.05∼1 mm and normally about 0.1∼0.5 mm. It is noted that a vitrified layer composed of the vitrifying agent alone does not substantially exist on the skin layer. Even if such a vitrifying layer exists, it may be as thin as less than 0.1 mm and may have pinholes, which is clealy distinguished from a conventional glaze layer. Thus, the skin-surfaced foam glass tile is provided with strength, closed cell structure, decorative tile design, light weight, properties of insulating heat and noises, etc. which are suitable as outdoor tile for buildings and the like. Of course, the foam glass tile can also be useful as indoor tile for walls and ceilings.

Other features of the present method and the resulting skin-surfaced tile are summrized below: ① it can be readily produced even in the case of complicated surface structures; ② deformation and decrease in strength due to stress are not caused in the firing step; ③ it has good resistance to thermal shocks; ④ properties of thermal insulation and light weight are not deteriorated by the skin layer; ⑤ the appearance does not substantially change even when some of the skin layer is accidentally scratched off; and ⑥ the skin-surfaced tile having a thin intermediate rigid layer of less foamed glass is increased in strength and minimized in generation of pinholes. Incidentally , if one should produce a foam glass body and then try to coat a skin layer thereon; the vitrifying agent fails to permeate into the foam glass body at a low firing temperature of about 800°C, the deformation and open cell structure take place in the foam glass body at a high firing temperature of about 1200°C, and the above-mentioned both defects are more or less caused at the firing between the temperatures.

The present skin-surfaced foam glass tile has a density of about 0.2∼1.3 g/cc and typically about 0.3 g/cc. Incidentally, the tile-like block before firing has a density of about 1.5 g/cc.

### (8) Installation of the Foam Glass Tile

As illustrated in FIG.4, a multiplicity of the foam glass tiles 4 are installed with suitable joint intervals (e.g. several millimeters) on a substrate such as a wall 30 with cement mortar 34. According to a preferred embodiment of installation, the joint intervals of the installed tiles are filled with a heat-insulating joint paste 32 so that the heat-insulating properties of the installed tiles 4 can be fully exhibited. The heat-insulating joint paste 32 contains an effective amount of cellular aggregate in cement mortar. Such cellular aggregate includes, for example, inorganic aggregate such as pearlite, vermiculite, furnace slag, volcanic valloon, and valcanic ash, and organic aggregate such as foamed polystyrene beads. For example, such joint paste comprises by weight about 35∼55 parts of pearlite aggregate, 100 parts of portland cement, 1 part of pigment, and 3 parts of cement auxiliaries in dry basis.

### EXAMPLES

### Ex. 1

As the natural vitrifiable mineral particles was used a mixture of 20 % by weight of liparite of Japanese origin and 80 % by weight of volcanic ash; the analysis of which showed in % by weight SiO₂ 75.4, Ai₂O₃ 12.2, Fe₂O₃ 1.0, CaO 0.8, K₂O 4.2, Na₂O 3.6, TiO₂ 0.1, MgO trace and ignition loss 2.9. Boro-silicate glass powder having a softening point of 585°C was used as the vitrifying agent; the analysis of which showed in % by weight SiO₂ 65.9, Al₂O₃ 4.1, B₂O₃ 18.3, ZnO 3.2, CaO 1.5, MgO 0.1, K₂O 1.7 and Na₂O 5.2. Incidentally, it has been found that boro-silicate is very useful because the mixture thereof with vitrifiable mineral particles are much lowered in softening temperature and have substantially the same thermal expansion coefficient as the foam glass body of the mineral particles.

The mixture of the above-mentioned mineral particles were pulverized in a crusher and a mill into powder having a mean size of about 15 microns, followed by addition thereto of 0.18 % by weight of silicon carbide foaming agent. The resulting mixture was compression-molded into a tile-like block of 120 x 120 x 40 mm(thickness).

A vitrifying agent composition was prepared by milling 100 parts by weight of the above-mentioned boro-silicate glass powder, 5 parts of quartz-kaoline clay, and 70 parts of water for 10 hours. The composition was applied by spray coating onto the top surface of the tile-like block at about 20 mg per square cm in wet basis. The coated block was fired in a tunnel kiln for total 24 hours and at a maximum temperature of 1180°C for 1 hour, to produce a skin-surfaced foam glass tile 4 of 180 x 180 x 60(thickness) composed of a foam glass body 1 and a skin layer 2 as shown in FIG.1. The surface hardness and strength of the skin layer 2 were higher than those of the foam glass body 1. The thermal shock property of the skin layer was substantially the same as the foam glass body.

### EX. 2

Example 1 was repeated except that about 30 mg per square cm in wet basis of a vitrifying agent composition consisting by weight of 18.9 parts of the boro-silicate glass powder, 78.5 parts of the above-mentioned vitrifiable mineral mixture containing no foaming agent, 1.3 parts of quartz-kaoline clay, 1.4 parts of gypsum and 76.0 parts of water was coated onto the tile-like block. The strength and smoothness of the resulting skin layer 2 were better than those obtained in Example 1.

### EX. 3

Example 1 was repeated except that about 37 mg per square cm in wet basis of a water glass (aqueous sodium silicate No. 3 according to Japanese Industrial Standards) vitrifying agent comprising in weight % SiO₂ about 29, Na₂O about 10, Fe 0.02 or less, water insolubles 0.2 or less and balance of water was coated onto the tile-like block. The resulting skin-surfaced foam glass tile was substantially the same as the tile obtained in Example 1.

### EX. 4

As the materials for the intermediate layer 12 of the skin-surfaced foam glass tile 16 as illustrated in FIG.2, used was (A) a mixture of mixed vitrifiable mineral particles as defined in Example 1 with 0.01 % by weight of SiC foaming agent, (B) a mixture of the mineral particles with 0.03 % of SiC foaming agent, or (C) a mixture of the mineral particles with 0.06 of SiC foaming agent.

The process of Example 2 was repeated except that the material (A), (B) or (C) for the intermediate layer was spray-coated onto the tile-like block (120 x 120 x 40 mm) to form a coated layer of about 2 mm thick. Thus, a skin-surfaced foam glass tile 16 composed of a foam glass 10, an intermediate layer 12 and a rigid skin layer 14 of about 180 x 180 x 60 mm(thickness).

The resulting skin-surfaced tiles (A), (B) and (C) exhibited no pinholes on the skin layers. Thermal shock test, evaluated by difference in temperature between that of cooling water and that of surface temperature of the foam glass tile when cracks take place, showed 50°C or higher in the case of tile (A) and 100°C or more in the case of tile (B) and tile (C). Incidentally, the skin-surfaced tile obtained in Example 2 exhibited some pinholes on its skin layer, and the thermal shock test thereof showed 100°C or more.

## Claims

1. A method for producing a heat-insulating skin-surfaced foam glass tile from vitrifiable mineral particles; which comprises:
molding a material consisting essentially of a vitrifiable mineral and an effective amount of a foaming agent into a tile-like block,
coating at least the top surface of the block at about 3mg to 50mg per square centimetre on a dry basis with a thin layer which includes vitrifying agent for the mineral material of the block,
heating the coated block to a temperature of fusing the coated layer to permeate substantially all of the molten vitrifying agent into the coated surface of the block, to produce a softened layer comprising a mixture of the vitrifying agent and the vitrifiable mineral,
further heating the coated block to a higher temperature sufficient to soften the vitrifiable mineral and decompose the foaming agent, and
standing the foamed tile-like block to cool;
whereby a rigid reinforcing skin layer consisting essentially of a vitrified mixture of the vitrifiable mineral and the permeated vitrifying agent is formed and integrally melt-bonded to the coated surface of the resulting foam glass tile.

2. The method according to Claim 1, in which the molded tile-like block has thin layer consisting essentially of a vitrifiable mineral and a foaming agent in a quantity less than the agent used in the block body, on at least the top surface of the block, and then at least the top surface of the thin layer is coated with a vitrifying agent layer.

3. The method according to Claim 1 or 2, in which densified particles of a mixture consisting essentially of a vitrifiable mineral and a foaming agent are molded into the tile-like block.

4. The method according to Claim 1, 2 or 3, in which slide refractory granules are placed between the vitrifying agent coated tile-like block and a firing stand in a kiln to permit expansion of the block relative to the firing stand.

5. The method according to Claim 1, 2, 3 or 4, in which the vitrifying agent comprises boron-silicate glass powder.

6. A skin-surfaced foam glass tile composed of a vitrified mineral and having heat-insulating properties, strength, closed cell structure and decorative tile design, which comprises a foam glass tile body and a rigid reinforcing skin layer consisting essentially of a vitrified mixture of a vitrifiable mineral and a vitrifying agent permeated into the mineral, said skin layer being integrally melt-bonded onto at least the top surface of the foam glass tile body, and containing about 3mg to 50mg per square centimetre of the vitrifying agent.

7. The skin-surfaced tile according to Claim 6, in which the foam glass tile has a thin intermediate rigid layer of less foamed glass material melt-bonded between the foam glass tile body and the rigid reinforcing skin layer.

8. The skin-surface tile according to Claim 6, 7 or 8, in which the rigid reinforcing skin layer comprises a vitrified mixture of a boron-silicate glass component and a vitrifiable mineral.

9. A skin-surfaced foam glass tile which is produced according to the method of any of Claims 1 to 5.

10. A plurality of tiles as claimed in any of Claims 6 to 9, being affixed to a substrate to form a heat-insulating layer thereon, the joints between the tiles being filled with a heat-insulating joint paste containing cellular aggregate.

## Patentansprüche

1. Eine Methode zur Erzeugung einer wärmedämmenden Schaumglasplatte mit Oberflächenhaut aus verglasbaren Mineralpartikeln, die folgendes umfaßt:
Formen eines im wesentlichen aus einem verglasbaren Mineral und einer wirksamen Menge eines Schaummittels bestehenden Materials zu einem plattenartigen Block,
Überziehen von mindestens der oberen Oberfläche des Blocks zu ca. 3 mg bis 50 mg pro Quadratzentimeter auf einer trockenen Basis mit einer dünnen Schicht, die ein Verglasungsmittel für das Mineralmaterial des Blocks enthält,
Erhitzung des beschichteten Blocks bis zu einer Temperatur, die ausreicht, die Überzugsschicht so zu verschmolzen, däß die beschichtete Oberfläche des Blocks im wesentlichen von dem gesamten geschmolzenen Verglasungsmittel durchdrungen wird, um eine weich gemachte Schicht zu erzeugen, die aus einer Mischung des Verglasungsmittels und des verglasbaren Minerale besteht,
weiteres Erhitzen des beschichteten Blocks zu einer höheren Temperatur, die ausreicht, das verglasbare Mineral zu erweichen und das Schaummittel zu zersetzen, und
Aufstellen des geschäumten plattenartigen Blocks zum Abkühlen,
wodurch eine harte verstärkende Hautschicht, im wesentlichen bestehend aus einer verglasten Mischung des verglasbaren Minerale und des eingedrungenen Verglasungsmittels, gebildet und integral mit der beschichteten Oberfläche der resultierenden Schaumglasplatte verschmolzen wird.

2. Die Methode zufolge Anspruch 1, bei welcher der geformte plattenartige Block eine im wesentlichen aus einem verglasbaren Mineral und einem Schaummittel bestehende dünne Schicht in einer Menge hat, die weniger als das in dem Blockkörper zumindest auf der oberen Blockoberfläche verwendete Mittel beträgt, und dann Beschichtung von zumindest der oberen Oberfläche der dünnen Schicht mit einer Verglasungsmittelschicht,

3. Die Methode zufolge Anspruch 1 oder 2, bei der verdichtete Partikel einer im wesentlichen aus einem verglasbaren Mineral und einem Schaummittel bestehenden Mischung zu dem plattenartigen Block geformt werden.

4. Die Methode zufolge Anspruch 1, 2 oder 3, bei der in einem Ofen feuerfeste Gleitkörnchen zwischen den mit Verglasungsmittel beschichteten plattenartigen Block und einen Brennständer gelegt werden, um eine Expansion des Blocks im Verhaltnis zum Brennständer zu ermöglichen.

5. Die Methode zufolge Anspruch 1, 2, 3 oder 4, bei der das Verglasungsmittel aus Borsilikatglaspulver besteht.

6. Eine aus einem verglasten Mineral bestehende und über wärmedämmende Eigenschaften, Festigkeit, geschlossene Zellenstruktur und dekoratives Plattendesign verfügende Schaumglasplatte mit Oberflächenhaut, die aus einem Schaumglasplattenkörper und einer harten verstärkenden Hautschicht besteht, die im wesentlichen aus einer verglasten Mischung eines verglasbaren Minerals und eines in das Mineral eingedrungenen Verglasungsmittels besteht, wobei die besagte Hautschicht zumindest mit der oberen Oberfläche des Schaumglasplattenkörpers verschmolzen ist und ca. 3 mg bis 50 mg pro Quadratmeter des Verglasungsmittels enthält.

7. Die Platte mit Oberflächenhaut zufolge Anspruch 6, bei welcher die Schaumglasplatte eine dünne harte Zwischenschicht von weniger geschäumtem Glasmaterial hat, die mit dem Schaumglasplattenkörper und der harten verstärkenden Hautschicht verschmolzen ist.

8. Die Platte mit Oberflächenhaut zufolge Anspruch 6, 7 oder 8, bei welcher die harte verstärkende Hautschicht aus einer verglasten Mischung eines Borsilikatglas-Bestandteils und eines verglasbaren Minerale besteht.

9. Eine Schaumglasplatte mit Oberflächenhaut, die gemäß dar in einem der Ansprüche 1 bis 5 verwendeten Methode erzeugt wird.

10. Eine Vielzahl von Platten gemäß einem der Ansprüche 6 bis 9, die auf einem Substrat befestigt wird, um darauf eine wärmedämmende Schicht zu bilden, wobei die Fugen zwischen den Platten mit einer ein Zellenaggregat enthaltenden wärmedämmenden Fugenpaste gefüllt werden.

## Revendications

1. Une méthode de production d'un carrelage isolant thermique en mousse de verra à surface lisse à partir de particules minérales comprenant:
Le moulage d'un matériau consistant essentiellement en un minéral vitrifiable et une quantité convenable d'un agent moussant en un bloc en forme de carreau,
un surfaçage à sec affectant au moins la couche supérieure du bloc à raison d'environ 3 mg à 50 mg par centimètre carré au moyen d'une mince couche comprenant un agent vitrificateur du matériau minéral du bloc,
le chauffage du bloc traîté en surface à une température de fusion de la couche de surface du bloc, de façon à faire pénétrer l'agent vitrificateur dans la surface à vitrifier du bloc, afin de produire une couche plus tendre comprenant un mélange de l'agent vitrificateur et du minéral vitrifiable,
un chauffage supplémentaire atteignant une température plus élevée suffisante pour rammolir le matériau vitrifiable et décomposer l'agent moussant et
une mise en refroidissement du bloc de mousse en forme de carreau,
grâce à quoi il se forme une couche rigide de renforcement, consistant essentiellement en un mélange vitrifié du minéral vitrifiable et de l'agent vitrificateur l'imprégnant, laquelle est intégralement liée par fusion à la surface vitrifée du carreau de mousse de verre ainsi produit.

2. La méthode selon la réclamation 1, par laquelle le bloc moulé en forme de carreau a une mince couche consistant en un matériau vitrifiable et un agent moussant en quantité moindre que l'agent utilisé dans le corps du bloc, au moins sur la surface supérieure du bloc et ensuite au moins la surface supérieure de la mince couche est recouverte d'une couche d'un agent vitrificateur.

3. La méthode selon la réclamation 1 ou 2, par laquelle des particules rendues plus danses d'un mélange consistant essentiellement en un minéral vitrifiable et un agent moussant sont moulées en un bloc en forme de carreau.

4. La méthode selon la réclamation 1, 2 ou 3, par laquelle des granulés réfractaires sont plaçés entre le bloc en forme de carreau recouvert d'un agent vitrificateur et le support d'exposition au feu dans un four afin de permettre l'expansion du bloc par rapport au support d'exposition au feu.

5. La méthode selon les réclamations 1, 2, 3 ou 4, par laquelle l'agent vitrificateur est constitué de poudre de verre de bore-silicate.

6. Un carreau de mousse de verre à surface vitrifiée composé d'un minéral vitrifié et possédant des propriétés d'isolation thermique, résistant, ayant une structure cellulaire formée et un motif décoratif de carrelage, et comportant un corps du carreau en mousse de verre et une couche de renforcement rigide en surface consistant essentiellement en un mélange vitrifiable d'un minéral vitrifiable et d'un agent de vitrification imprégnant le minéral, ladite couche de surface étant intégralement liée par fusion au moins sur la surface supérieure du corps du carreau en mousse de verre et contenant environ 3 mg à 50 mg par centimètre carré d'agent vitrificateur.

7. Le carreau à surface lisse selon la réclamation 6, dans lequel le carreau en mousse de verre possède une mince couche intermédiaire rigide de matériau de mousse de verre moins moussant liée par fusion entre le corps du carreau en mousse de verre et la couche lisse rigide de renforcement.

8. Le carreau à surface lisse selon la réclamation 6, 7 ou 8, dans lequel la couche de surface rigide de renforcement est constituée d'un mélange vitrifié d'une composante de verre de bore-silicate et d'un minéral vitrifiable.

9. Un carreau à surface lisse en mousse de verre produit selon la méthode de n'importe laquelle des réclamations 1 à 5.

10. Une pluralité de carreaux tels qu'il est dit à n'importe laquelle des réclamations 6 à 9, fixés à une couche support de manière à former sur celui-ci une couche isolante, les interstices entre les carreaux étant remplis d'une pâte isolante thermique de remplissage contenant un aggrégat cellulaire.
